# EUROPÄISCHE PATENTANMELDUNG

(11) **EP 4 513 064 A1**
(43) Veröffentlichungstag der Anmeldung: **26.02.2025**
(21) Anmeldenummer: 23193347.4
(22) Anmeldetag: 25.08.2023
(51) Int. Cl.: F16K 1/02, F16K 1/04, F16K 31/50, F16K 31/60, F16K 35/02

(54) **ABSPERRVENTIL**

(71) Anmelder: Geberit International AG, 8645 Jona (CH)
(72) Erfinder: ZWICKER, Maurus, 8733 Eschenbach (CH)
(74) Vertreter: Frischknecht, Harry Ralph

(57) **Zusammenfassung**

Absperrventil (1), insbesondere ein Eckventil, umfassend
ein Ventilgehäuse (2) mit einem Wasserführungskanal (3), der einen Eingang (4) und einen Ausgang (5) aufweist und mit einem vom Ventilgehäuse (2) wegragenden, den Ausgang (5) bereitstellenden Anschlussstutzen (6),
einen Ventilstössel (7) mit einer Dichtfläche (8), welche in einer Durchflusslage beabstandet zu einem im Wasserführungskanal (3) angeordneten Ventilsitz (9) liegt und welche in einer Absperrlage dichtend am Ventilsitz (9) anliegt, und
ein um eine Drehachse (D) drehbares Handrad (10), das mit dem Ventilstössel (7) in fester, insbesondere drehfester, Verbindung steht und mit welchem der Ventilstössel (7) betätigbar ist,
wobei das Absperrventil (1) weiterhin ein auf das Handrad (10) wirkendes Anschlagselement (11) aufweist, wobei das Anschlagselement (11) von einer Anschlagslage in eine Freigabelage bewegbar ist,
wobei in der Anschlagslage das Anschlagselement (11) derart zum Handrad (10) liegt, dass das Handrad (10) nicht oder nur eingeschränkt betätigbar ist; und
wobei in der Freigabelage das Anschlagselement (11) derart zum Handrad liegt, dass das Handrad betätigbar ist.

## Beschreibung

### TECHNISCHES GEBIET

Die vorliegende Erfindung betrifft ein Absperrventil nach dem Oberbegriff von Anspruch 1.

### STAND DER TECHNIK

Aus dem Stand der Technik sind Absperrventile für den Einbau in Spülkästen bekannt. Solche Absperrventile dienen der Verbindung einer hausseitigen Wasserleitung und einem Füllventil. Beispielsweise offenbart die EP 2 837 861 ein derartiges Absperrventil.

### DARSTELLUNG DER ERFINDUNG

Ausgehend von diesem Stand der Technik liegt der vorliegenden Erfindung eine Aufgabe zugrunde, ein Absperrventil anzugeben, welches die Nachteile des Standes der Technik überwindet. Insbesondere liegt der vorliegenden Erfindung eine Aufgabe zugrunde, ein Absperrventil mit erweiterten Funktionen anzugeben.

Diese und andere Aufgaben löst ein Absperrventil, insbesondere ein Eckventil, nach Anspruch 1. Demgemäss umfasst das Absperrventil:
- ein Ventilgehäuse mit einem Wasserführungskanal, der einen Eingang und einen Ausgang aufweist und mit einem vom Ventilgehäuse wegragenden, den Ausgang bereitstellenden Anschlussstutzen,
- einen Ventilstössel mit einer Dichtfläche, welche in einer Durchflusslage beabstandet zu einem im Wasserführungskanal angeordneten Ventilsitz liegt und welche in einer Absperrlage dichtend am Ventilsitz anliegt, und
- ein um eine Drehachse drehbares Handrad, das mit dem Ventilstössel in fester, insbesondere drehfester, Verbindung steht und mit welchem der Ventilstössel betätigbar ist.

Weiter weist das Absperrventil ein Anschlagselement auf, welches auf das Handrad wirkt.

Das Anschlagselement ist von einer Anschlagslage in eine Freigabelage bewegbar. In der Anschlagslage liegt das Anschlagselement derart zum Handrad, dass das Handrad nicht oder nur eingeschränkt betätigbar ist, und in der Freigabelage liegt das Anschlagselement derart zum Handrad, dass das Handrad betätigbar ist.

Durch die Anordnung des Anschlagselements ergeht der Vorteil, dass am Absperrventil ein zusätzliches Element angeordnet ist, welches erweiterte Funktionen zulässt. So ist es beispielsweise möglich, dass mit dem Anschlagselement die Betätigung des Handrads durch einen Installateur erst nach Bewegung des Anschlagselements vorgenommen werden kann. Das heisst, für die Betätigung muss der Installateur zwei Elemente betätigen, was die Manipulations- bzw. die Montagesicherheit erhöht. In einem anderen Beispiel ist es möglich, dass die Position des Handrades und somit auch die des Ventilstössels durch das Anschlagselement festgelegt werden kann.

Je nach Ausbildung bzw. relative Anordnung des Handrads zum Anschlagselement kann das Handrad in der Anschlagslage nur eingeschränkt oder gar nicht betätigt werden. Unter einer eingeschränkten Betätigung ist zu verstehen, dass das Handrad und der Ventilstössel nicht über den vollen Hub betätigt werden können. Das Handrad kann demnach so eingeschränkt betätigt werden, bis dieses am Anschlagselement ansteht.

In der Freigabelage liegt das Anschlagselement derart zum Handrad, dass das Handrad ohne Einschränkung durch das Anschlagselement bewegt werden kann.

Die Bewegung des Anschlagselements erfolgt relativ zum Ventilgehäuse.

Vorzugsweise umfasst das Absperrventil weiterhin ein Anschlussrohrstück, wobei das Ventilgehäuse mit einem am Eingang vorgesehenen Anschlussstutzen mit dem Anschlussrohrstück in Verbindung steht.

Das Anschlussrohrstück wird im eingebauten Zustand mit einer Wasserleitung verbunden. Hierfür weist das Anschlussrohrstück bevorzugt ein Anschlussgewinde, insbesondere ein Aussengewinde auf. Wenn das Anschlussrohrstück nicht vorhanden ist, kann das Ventilgehäuse direkt mit einer Wasserleitung verbunden werden.

Vorzugsweise weist das Ventilgehäuse ein Aussengewinde und das Anschlussrohrstück weist ein Innengewinde auf. Das Ventilgehäuse kann mit dem Aussengewinde in das Innengewinde des Anschlussrohrstücks eingeschraubt werden. Weiter ist zwischen dem Anschlussrohrstück und dem Ventilgehäuse eine Dichtstruktur angeordnet.

Vorzugsweise weist das Anschlussrohrstück eine Mehrkantstruktur auf und das Anschlagselement weist eine dazu passende Kantstruktur auf. Das Anschlagselement ist nur dann aus der Anschlagslage in die Freigabelage bewegbar, wenn die Kantstruktur zur Mehrkantstruktur ausgerichtet ist.

Vorzugsweise handelt es sich beim Mehrkantstruktur um einen Vierkant, einen Sechskant oder einen Achtkant. Grössere Zahlen von Kanten sind auch denkbar. Die Mehrkantstruktur umfasst eine entsprechende Zahl von Kantflächen, welche in gleichmässigen Abständen um die Mittelachse verteilt angeordnet sind.

Die Kantstruktur umfasst Teile eines Mehrkants, insbesondere mindestens eine Kantfläche. Die Form der Kanten des Kantstruktur sind passend zu der Form der Kanten des Mehrkants ausgebildet.

Vorzugsweise ist das Anschlagselement drehfest, aber längsverschieblich, am Ventilgehäuse gelagert. Wenn das Anschlagselement mit seiner Kantstruktur in die Mehrkantstruktur des Anschlussrohrstücks eingreift, wird über das Anschlagselement eine Verdrehsicherung zwischen dem Ventilgehäuse und dem Anschlussrohrstück bereitgestellt. Somit ist das Ventilgehäuse zum Anschlussrohrstück in einer ausgerichteten Lage montierbar, nämlich basierend auf der Lage der Mehrkantstruktur. Weiter wird über das Anschlagselement ein Sicherungselement bereitgestellt, welches ein unbeabsichtigtes Lösen des Ventilgehäuses vom Anschlussrohrstück verhindert.

Vorzugsweise greift das Anschlagselement ausschliesslich in der Freigabelage in den Mehrkant ein, nicht aber in der Anschlagslage.

Vorzugsweise weist das Anschlussrohrstück einen Flansch mit Seitenflächen auf, mit welchen das Anschlussrohrstück in einem Spülkasten in einer vorbestimmten Lage platzierbar ist, wodurch auch die besagte Mehrkantstruktur lageorientiert im Spülkasten liegt. Durch den Eingriff des Mehrkants in die Mehrkantstruktur kann das Ventilgehäuse lageorientiert in den Spülkasten eingesetzt werden.

Vorzugsweise muss für die Demontage des Ventilgehäuses vom Anschlussrohrstück das Anschlagselement von der Freigabelage in die Anschlagslage bewegt werden, derart, dass der Eingriff zwischen der Kantstruktur und der Mehrkantstruktur aufhebbar ist und dass vor der Bewegung des Anschlagselements der Ventilstössel mit dem Handrad in die Durchflusslage bewegt werden muss.

Die Demontage des Ventilgehäuse vom Anschlussrohrstück ist demnach nur möglich, wenn das Ventil offen ist. Sollte die Zuflussleitung noch unter Wasserdruck stehen, wird bei offenem Ventil kontrolliert Wasser über den Ausgang abfliessen. Wenn das Absperrventil in einem Spülkasten montiert ist, wird das ausfliessende Wasser kontrolliert im Spülkasten aufgefangen. Der Installateur wird dies feststellen und kann dann die Zuflussleitung drucklos schalten, z.B. durch Schliessen eines Ventils in der Zuflussleitung. Erst dann, so wird der Installateur erkennen, wird das Ventilgehäuse vom Anschlussrohrstück getrennt.

Vorzugsweise ist das Anschlagselement eine Hülse, welche eine Seitenwand aufweist, die sich um das Ventilgehäuses herum erstreckt, und welche an der Seitenwand relativ zum Ventilgehäuse verschiebbar gelagert ist.

Die oben genannte Kantstruktur ist vorzugsweise innerhalb der Hülse angeordnet.

Vorzugsweise weist die Hülse einen mindestens teilweise zylindrisch ausgebildeten Innenraum aufweist und dass das Ventilgehäuse einen zylindrischen Abschnitt aufweist, wobei die Hülse über den zylindrischen Innenraum am zylindrischen Abschnitt verschiebbar gelagert ist.

Vorzugsweise ist der zylindrische Innenraum und der zylindrische Abschnitt teilweise durch eine Nute bzw. einen Kamm unterbrochen, wobei der Kamm in die Nute eingreift und so eine Verdrehsicherung zwischen der Hülse und dem Ventilgehäuse bereitstellt. Die Nute und der Kamm sind in Bewegungsrichtung der Hülse orientiert.

Vorzugsweise weist die Hülse einen Einschnitt auf, durch welchen der Anschlussstutzen hindurchragt.

Vorzugsweise weist das Anschlagselement mindestens ein anschlagseitiges Rastelement auf und das Ventilgehäuse weist mindestens ein ventilseitiges Rastelement auf. Die Rastelemente stellen eine Verrastung des Anschlagselements zum Ventilgehäuse in der Anschlagslage und/oder in der Freigabelage bereit.

Vorzugsweise sind zwei anschlagsseitige Rastelemente und ein ventilseitiges Rastelement angeordnet, wobei in der Anschlagslage das eine anschlagsseitige Rastelement mit dem ventilseitigen Rastelement im Eingriff ist und in der Freigabelage das andere anschlagsseitige Rastelement mit dem ventilseitigen Rastelement im Eingriff ist.

In einer ersten Variante ist das Anschlagselement derart ausgebildet und angeordnet, dass wenn das Anschlagselement in der Anschlagslage ist, der Ventilstössel in der Durchflusslage ist, und dass wenn das Anschlagselement in der Freigabelage ist, der Ventilstössel durch Betätigung des Handrads von der Durchflusslage in die Verschlusslage bewegbar ist.

In einer zweiten Variante ist das Anschlagselement derart ausgebildet und angeordnet, dass wenn das Anschlagselement in der Anschlagslage ist, der Ventilstössel in der Verschlusslage ist, und dass wenn das Anschlagselement in der Freigabelage ist, der Ventilstössel durch Betätigung des Handrads von der Durchflusslage in die Verschlusslage bewegbar ist.

Je nach Ausbildung und weiteren Funktionen ist das Anschlagselement unterschiedlich relativ zum Ventilgehäuse bewegbar:
- In einer Variante ist das Anschlagselement in Richtung der Drehachse entlang einer Längsbewegung relativ zum Ventilgehäuse von der Anschlagslage in die Freigabelage verschiebbar.
- In einer anderen Variante ist das Anschlagselement entlang einer Drehbewegung um die Drehachse herum relativ zum Ventilgehäuse von der Anschlagslage in die Freigabelage verschiebbar.
- In einer weiteren Variante ist das Anschlagselement in Richtung der Drehachse und um die Drehachse herum relativ zum Ventilgehäuse von der Anschlagslage in die Freigabelage verschiebbar ist.

Vorzugsweise ist der Ventilstössel von der Durchflusslage in die Absperrlage über einen Stösselhub bewegbar. Der Stösselhub entspricht der Hubbewegung des Handrads zum Ventilgehäuse. Das Anschlagselement ist von der Anschlagslage in die Freigabelage über einen Anschlagshub bewegbar, wobei der Anschlagshub bevorzugt grösser als der Stösselhub ist.

Vorzugsweise weist das Anschlagselement eine anschlagsseitige Anschlagsfläche auf und das Handrad weist eine handradseitige Anschlagsfläche auf, wobei in der Anschlagslage die anschlagsseitige Anschlagsfläche derart steht, dass bei einer Bewegung des Handrads die handradseitige Anschlagsfläche mit der anschlagsseitigen Anschlagsfläche in Kontakt bringbar ist bzw. in Kontakt ist.

Vorzugsweise weist das Ventilgehäuse einen Befestigungsabschnitt mit einem Flansch und einem sich dem Flansch anschliessenden Aussengewinde, auf welchem eine Mutter mit einem Innengewinde gelagert ist, auf. Wenn das Anschlussrohrstück vorhanden ist, weist das Anschlussrohrstück vorzugsweise einen Befestigungsabschnitt mit einem Flansch und einem sich dem Flansch anschliessenden Aussengewinde, auf welchem eine Mutter mit einem Innengewinde gelagert ist, auf.

Vorzugsweise weist der Wasserführungskanal einen sich vom Eingang weg ersteckenden ersten Kanalabschnitt auf, der sich entlang einer ersten Mittelachse, und einen sich zum Ausgang hin erstreckenden zweiten Kanalabschnitt, der sich entlang einer zweiten Mittelachse erstreckt, auf. Die beiden Mittelachsen stehen einem Winkel (α, alpha) winklig geneigt zueinander stehen. Der Winkel (α, alpha) liegt vorzugsweise zwischen 45° und 135°, insbesondere bei 90°.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1a: eine perspektivische Ansicht des Absperrventils nach einer bevorzugten Ausführung der vorliegenden Erfindung vor der Montage;
- Fig. 1b: eine Seitenansicht der Figur 1a;
- Fig. 1c: eine Schnittdarstellung der Figur 1a, wobei der Schnitt winklig zu einem Anschlussstutzen verläuft,
- Fig. 1d: eine Schnittdarstellung der Figur 1a, wobei der Schnitt durch den Anschlussstutzen verläuft,
- Fig. 2a: eine perspektivische Ansicht des Absperrventils nach den vorhergehenden Figuren während der Montage, wobei ein Anschlagselement in der Anschlagslage ist;
- Fig. 2b: eine Seitenansicht der Figur 2a;
- Fig. 2c: eine Schnittdarstellung der Figur 2a, wobei der Schnitt winklig zu einem Anschlussstutzen verläuft,
- Fig. 2d: eine Schnittdarstellung der Figur 2a, wobei der Schnitt durch den Anschlussstutzen verläuft,
- Fig. 3a: eine perspektivische Ansicht des Absperrventils nach den vorhergehenden Figuren während der Montage, wobei ein Anschlagselement in der Freigabelage ist;
- Fig. 3b: eine Seitenansicht der Figur 3a;
- Fig. 3c: eine Schnittdarstellung der Figur 3a, wobei der Schnitt winklig zu einem Anschlussstutzen verläuft,
- Fig. 3d: eine Schnittdarstellung der Figur 3a, wobei der Schnitt durch den Anschlussstutzen verläuft,
- Fig. 3e: eine Schnittdarstellung der Figur 3e nach dem Vorbild der Figur 3c, wobei das Anschlagselement mit einem Anschlussrohrstück kollidiert,
- Fig. 4a: eine perspektivische Ansicht des Absperrventils nach den vorhergehenden Figuren nach der Montage, wobei ein Anschlagselement in der Freigabelage ist;
- Fig. 4b: eine Seitenansicht der Figur 4a;
- Fig. 4c: eine Schnittdarstellung der Figur 4a, wobei der Schnitt winklig zu einem Anschlussstutzen verläuft, und
- Fig. 4d: eine Schnittdarstellung der Figur 4a, wobei der Schnitt durch den Anschlussstutzen verläuft.

### BESCHREIBUNG BEVORZUGTER AUSFÜHRUNGSFORMEN

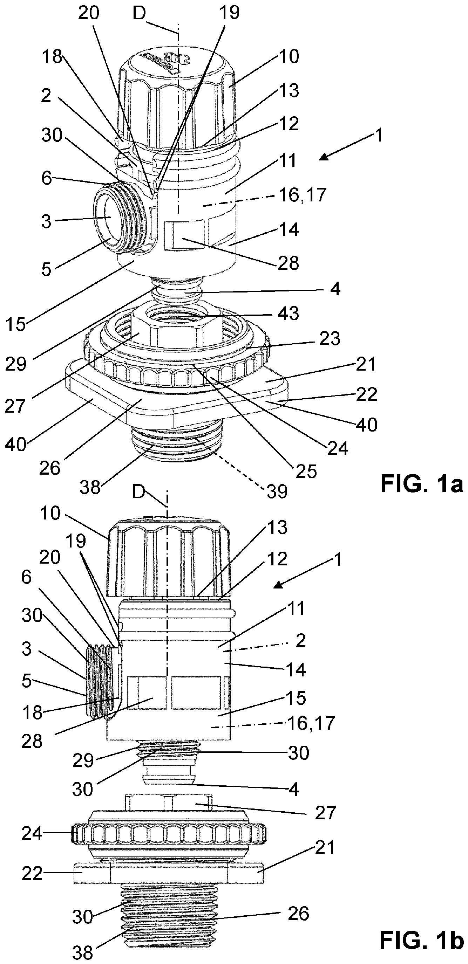

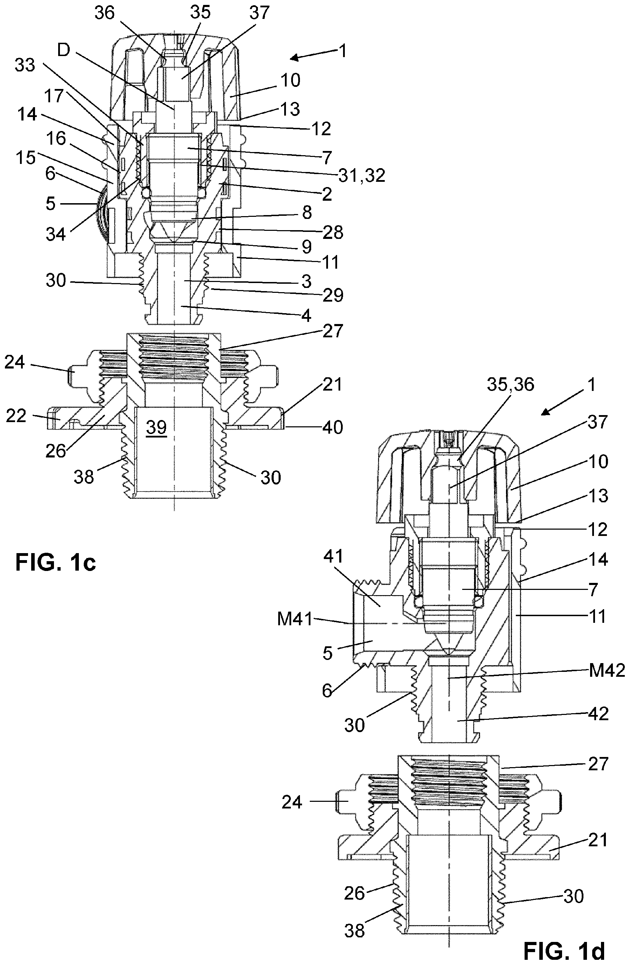

In den Figuren 1a bis 4d wird ein Absperrventil 1, insbesondere ein Eckventil, nach einer bevorzugten Ausführungsform der vorliegenden Erfindung gezeigt. Das Absperrventil wird typischerweise in einen Spülkasten eingesetzt und dient der Absperrung bzw. Freigabe der Wasserversorgung zu einem ebenfalls im Spülkasten angeordneten Füllventil.

Von den Figuren ist ersichtlich, dass das Absperrventil 1 ein Ventilgehäuse 2, einen Ventilstössel 7 und ein Handrad 10 umfasst. Der Ventilstössel 7 kann auch als Spindel bezeichnet werden. Weiter umfasst das Absperrventil 1 ein Anschlussrohrstück 26, welches optional angeordnet werden kann.

Das Ventilgehäuse 2 umfasst einen Wasserführungskanal 3, der einen Eingang 4 und einen Ausgang 5 aufweist. Ferner ragt ein Anschlussstutzen 6, der den Ausgang 5 bereitstellt, vom Ventilgehäuse 2 weg. Am Anschlussstutzen 6 kann ein Füllventil angeschlossen werden. Der Eingang 4 weist hier ebenfalls einen Anschlussstutzen 29 auf. Beide Anschlussstutzen 6, 34 weisen jeweils ein Anschlussstutzengewinde 30 auf. Hier ist am Anschlussstutzen 29 das Anschlussrohrstück 26 angeordnet. Ein Wasserführungsabschnitt 39 im Anschlussrohrstück 26 setzt den Wasserführungskanal 3 fort.

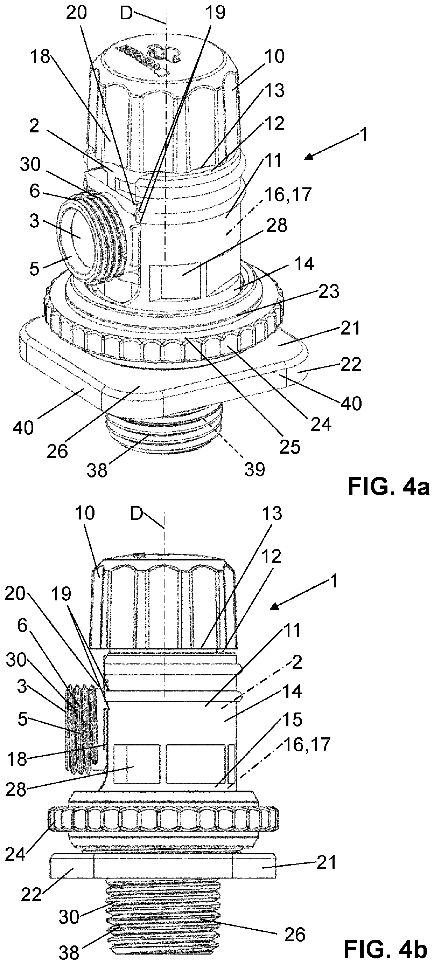

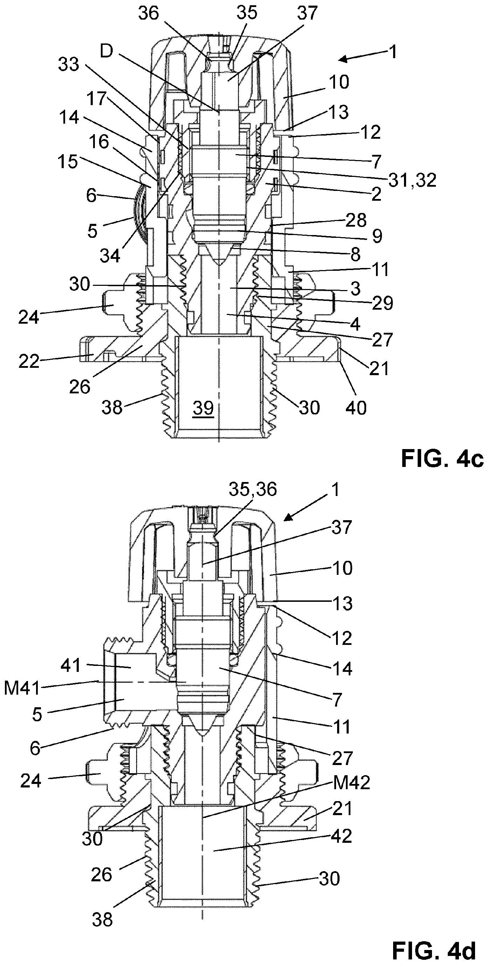

Der Ventilstössel 7 weist eine Dichtfläche 8 auf, welche mit einem im Wasserführungskanal 3 angeordneten Ventilsitz 9 zusammenarbeitet. Der Ventilstössel 7 ist dabei von einer Verschlusslage in eine Durchflusslage bewegbar. In den Figuren 1a-3e wird der Ventilstössel 7 in der Durchflusslage gezeigt und in den Figuren 4a-4d wird der Ventilstössel 7 in der Durchflusslage gezeigt. In der Verschlusslage liegt der Ventilstössel 7 mit der Dichtfläche 8 auf dem Ventilsitz 9 auf. In der Durchflusslage liegt der Ventilstössel mit der Dichtfläche 8 derart beabstandet zum Ventilsitz 9, dass das Wasser durch den Wasserführungskanal 3 hindurchströmen kann. Der Ventilstössel 7 weist hier ein Aussengewinde 31 auf, welches in einem Innengewinde 32 im Ventilgehäuse 2 schraubbar gelagert ist. Das Aussengewinde 31 ist hier Teil einer Gewindebüchse 33, welche in das Ventilgehäuse 2 eingesetzt wird. Die Gewindebüchse 33 ist über eine Gewindestruktur 34 in das Ventilgehäuse 2 eingeschraubt. Die Gewindestruktur 34 weist eine andere Gangrichtung als das Aussengewinde 31 bzw. das Innengewinde 32 auf. Vorzugsweise ist die Gewindestruktur 34 ein Linksgewinde und das Aussengewinde 31 bzw. das Innengewinde 32 sind ein Rechtsgewinde.

Der Ventilstössel 7 kann über das Handrad 10, welches drehfest mit dem Ventilstössel 7 in Verbindung steht, betätigt werden. Das Handrad 10 steht über einen Einrastabschnitt 35 mit einem Lagerabschnitt 36 des Ventilstössels 7 in axial fester Verbindung. Ferner weisen der Ventilstössel 7 und das Handrad 10 eine Drehübertragungsstruktur 37, hier eine Mehrkantstruktur bzw. eine Vierkantstruktur, auf, über welche eine drehfeste Verbindung bereitgestellt wird.

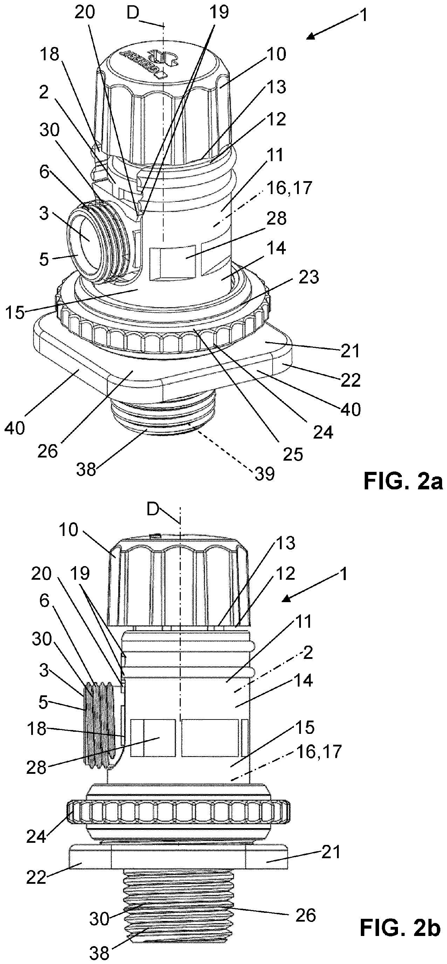

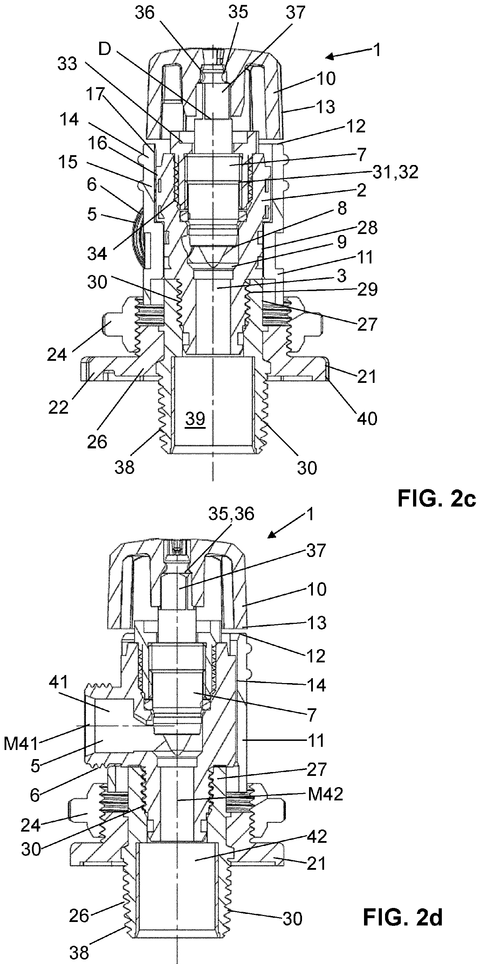

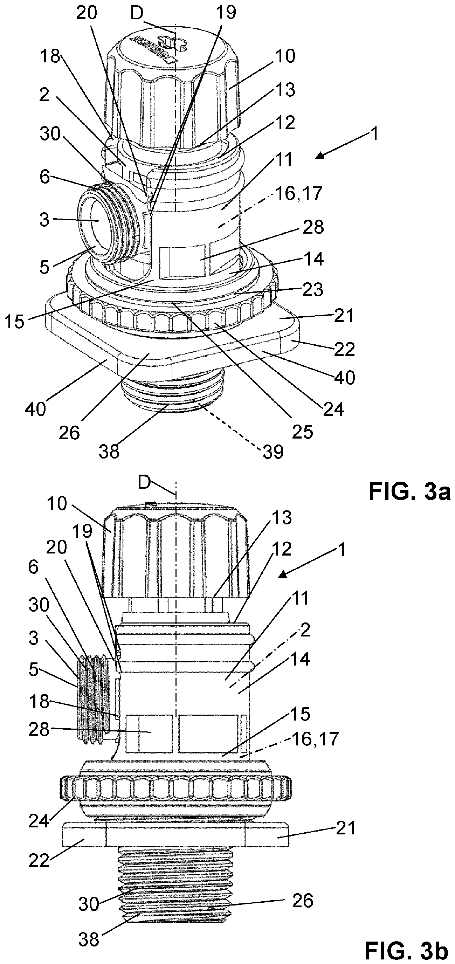

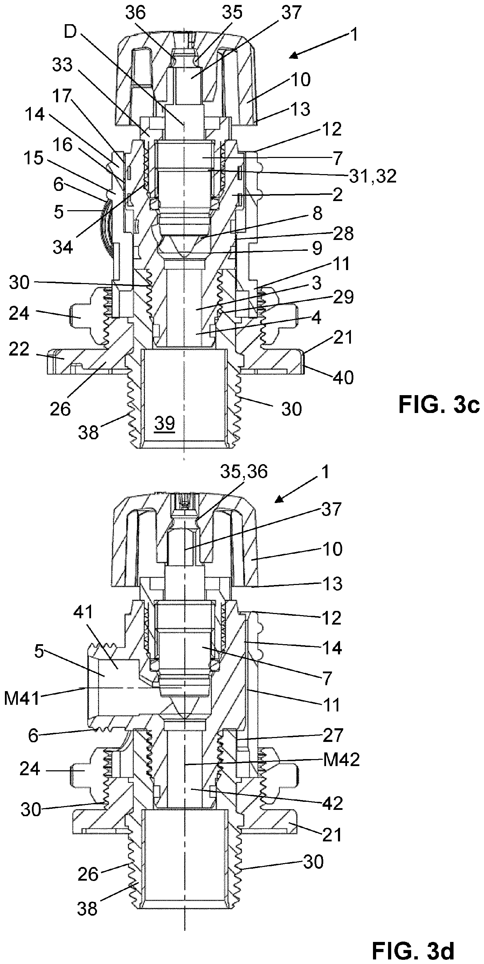

Das Absperrventil 1 weist weiterhin ein Anschlagselement 11 auf. Das Anschlagselement 11 wirkt auf das Handrad 10. Das Anschlagselement 11 ist von einer Anschlagslage in eine Freigabelage bewegbar. In der Anschlagslage, so wie in den Figuren 2a bis 2d gezeigt, liegt das Anschlagselement 11 derart zum Handrad 10, dass das Handrad 10 nicht oder nur eingeschränkt betätigbar ist. In der Freigabelage liegt das Anschlagselement 11 derart zum Handrad, dass das Handrad uneingeschränkt betätigbar ist. Die Freigabelage wird in den Figuren 3a bis 3d sowie 4a bis 4d gezeigt.

In der gezeigten Ausführungsform ist das Absperrventil 1 bzw. sind die Teile des Absperrventils 1 derart ausgebildet, dass, wenn das Anschlagselement 11 in der Anschlagslage ist, der Ventilstössel 7 in der Durchflusslage ist und dass, wenn das Anschlagselement 11 in der Freigabelage ist, der Ventilstössel 7 durch Betätigung des Handrads 10 von der Durchflusslage in die Verschlusslage bewegbar ist.

In der gezeigten Ausführungsform ist das Anschlagselement 11 in Richtung der Drehachse D des Handrads 10 entlang einer Längsbewegung relativ zum Ventilgehäuse 2 von der Anschlagslage in die Freigabelage verschiebbar.

In den Figuren 1a bis 1d wird das Anschlussrohrstück 26 im noch nicht montierten Zustand mit dem Ventilgehäuse 2 gezeigt. Das Anschlussrohrstück 26 kann mit dem am Eingang 4 vorgesehenen Anschlussstutzen 29 verbunden werden. Hierzu weist das Anschlussrohrstück 26 ein Innengewinde 43 auf, in welches der Anschlussstutzen 29 mit seinem Anschlussstutzengewinde 30 eingeschraubt werden kann. Das Anschlussrohrstück 26 weist seinerseits ein Anschlussstutzen 38 auf, mit welchem das Anschlussrohrstück 26 mit einer Wasserleitung verbindbar ist.

Das Anschlussrohrstück 26 weist weiterhin eine Mehrkantstruktur 27 auf, welche hier als Sechskant ausgebildet ist. Weiter weist das Anschlagselement 11 eine zur Mehrkantstruktur 27 passende Kantstruktur 28 auf. Das Anschlagselement 11 ist dabei aus der Anschlagslage nur dann in die Freigabelage bewegbar, wenn die Kantstruktur 28 zur Mehrkantstruktur 27 ausgerichtet ist.

In der gezeigten Ausführungsform ist das Anschlagselement drehfest, aber längsverschieblich bzw. axial verschiebbar, am Ventilgehäuse gelagert. Wenn das Anschlagselement 11 mit seiner Kantstruktur 28 in die Mehrkantstruktur 27 des Anschlussrohrstücks 26 eingreift, ist weiterhin eine Verdrehsicherung zwischen dem Ventilgehäuse 2 und dem Anschlussrohrstück 26 bereitstellbar.

Ausgehend von der Position gemäss der Figuren 1a bis 1d wird das Ventilgehäuse 2 mit dem Anschlussrohrstück 26 verbunden. Dabei wird das Ventilgehäuse 2 über die Gewindestruktur 39 mit dem Anschlussrohrstück 26 verbunden. Bei der Verbindung befindet sich der Ventilstössel 7 in der Durchflusslage und das Anschlagselement 11 befindet sich in der Anschlagslage.

In den Figuren 2a bis 2d wird das Ventilgehäuse 2 und das Anschlussrohrstück 26 im miteinander verbundenen Zustand gezeigt. Das Ventilgehäuse 2 ist dabei mit dem Anschlussrohrstück 26 über die Gewindestruktur 39 verschraubt. Das Anschlagselement 11 befindet sich in den genannten Figuren immer noch in der Anschlagslage. Ausgehend von dieser Position lässt sich das Anschlagselement 11 von der Anschlagslage in die Freigabelage verschieben, sofern die Kantstruktur 28 zur Mehrkantstruktur 27 korrekt ausgerichtet ist.

In den Figuren 3a bis 3d befindet sich das Anschlagselement 11 in der Freigabelage. Hier sind die Kantstruktur 28 und die Mehrkantstuktur 27 korrekt zueinander ausgerichtet und das Anschlagselement 11 kann so verschoben werden, dass die Kantstruktur 28 und die Mehrkantstuktur 27 ineinander greifen.

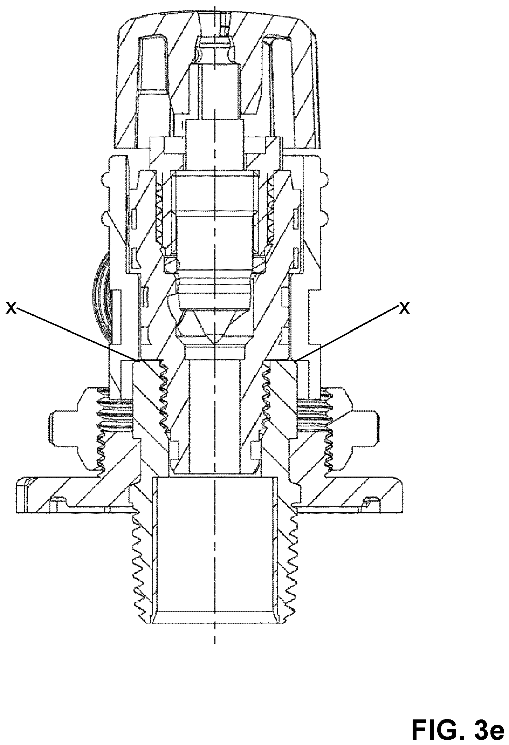

In der Figur 3e wird eine Position des Anschlagselements 11 gezeigt, in welcher die Kantstruktur 28 und die Mehrkantstuktur 27 nicht korrekt ausgerichtet sind. Dabei steht die Kantstruktur 28 an der Mehrkantstruktur 27 an einer Kollisionsstelle an. Die Stelle, an welcher die Kantstruktur 28 an der Mehrkantstruktur 27 ansteht, ist mit dem Bezugszeichen X gekennzeichnet. Das heisst, dass das Anschlagselement 11 nicht vollständig die Freigabelage erreicht und daher nach wie vor einen Anschlag für das Handrad 10 bereitstellt. Befindet sich das Ventilgehäuse 2 in dieser Position, muss das Ventilgehäuse 2 relativ zum Anschlussrohrstück 26 verschwenkt werden, so dass die Kantstruktur 28 und die Mehrkantstuktur 27 zueinander ausgerichtet sind.

In den Figuren 4a bis 4d wird das Anschlagselement 11 in der Freigabelage gezeigt. Wenn das Anschlagselement 11 in der Freigabelage steht, kann das Handrad 10 zusammen mit dem Ventilstössel 7 uneingeschränkt betätigt werden. Das Anschlagselement 11 liegt dabei derart, dass dieses ausserhalb des Bewegungsbereichs des Handrads 10 liegt und daher keinen Anschlag für das Anschlagselement 11 bereitstellt.

Bei einer Demontage des Absperrventils vom Anschlussrohrstück 26 muss das Anschlagselement wieder in die Anschlusslage gebracht werden. Dabei muss, ausgehend von den Figuren 4a bis 4d, der Ventilstössel 7 und das Handrad 10 in die Durchflusslage betätigt werden. Anderenfalls lässt sich das Anschlagselement 11 nicht in die Anschlagslage bewegen, weil das Handrad 10 in der Verschlusslage einer Bewegung des Anschlagselements 11 im Weg steht. Sobald der Ventilstössel 7 und das Handrad 10 sich in der Durchflusslage befinden, so wie in den Figuren 3a bis 3d gezeigt, kann das Anschlagselement 11 zum Handrad 10 hin in seine Anschlagslage bewegt werden. Dabei wird der Eingriff über zwischen der Kantstruktur 28 und der Mehrkantstruktur 27 aufgehoben und das Ventilgehäuse 2 bezüglich des Anschlussrohrstücks 26 getrennt werden. Dies Art der Demontage ist vorteilhaft, da der Installateur gezwungen ist, den Ventilstössel 7 in die Durchflusslage zu bewegen, was bewirkt, dass bei noch anstehendem Wasserdruck Wasser aus den Ausgang 5 kontrolliert ausfliessen kann und dies vom Installateur wahrgenommen werden kann. Der Installateur kann dann die Wasserversorgung vor dem Ausschrauben des Ventilgehäuses 2 noch unterbrechen. Dies verhindert einen unkontrollierten Wasseraustritt bei der Entfernung des Ventilgehäuses 2.

In der gezeigten Ausführungsform ist das Anschlagselement 11 eine Hülse 14. Die Hülse 14 weist eine Seitenwand 15. Die Seitenwand 15 erstreckt sich um das Ventilgehäuse 2 herum und ist an der Seitenwand 15 relativ zum Ventilgehäuse 2 verschiebbar gelagert.

Die Hülse 14 weist einen mindestens teilweise zylindrisch ausgebildeten Innenraum 16 auf und das Ventilgehäuse 2 einen zylindrischen Abschnitt 17 auf. Die Hülse 14 ist über den zylindrischen Innenraum 16 am zylindrischen Abschnitt 17 verschiebbar gelagert.

Ferner weist die Hülse 14 einen Einschnitt 18 auf, durch welchen der Anschlussstutzen 6 hindurchragt. Der Einschnitt 18 ist dabei so bemessen, dass die Hülse 14 den Anschlagshub ausführen kann.

Die oben genannte Kantstruktur 28 des Anschlagselements wird ebenfalls durch die Hülse 14 bereitgestellt. Die Kantstruktur 28 befindet sich an der Innenseite der Hülse 14. Die Zahl der Kanten der Kantstruktur 28 muss nicht mit der Zahl der Kanten der Mehrkantstruktur 27 des Anschlussrohrstücks 27 übereinstimmen.

Vorzugsweise weist das Anschlagselement 11 mindestens ein anschlagseitiges Rastelement 19 auf und das Ventilgehäuse 2 weist mindestens ein ventilseitiges Rastelement 20 auf. Die beiden Rastelement 19, 20 sind von den perspektivischen Figuren 1a, 2a, 3a und 4a ersichtlich. Die Rastelemente 19, 20 stellen eine Verrastung des Anschlagselements 11 zum Ventilgehäuse 2 in der Anschlagslage und/oder in der Freigabelage bereit. In der gezeigten Ausführungsform wird eine Verrastung sowohl in der Anschlagslage als auch in der Freigabelage bereitgestellt. Es sind hier zwei anschlagsseitige Rastelemente 19 angeordnet und es ist ein ventilseitiges Rastelement 20 angeordnet. In der Anschlagslage ist das eine anschlagsseitige Rastelement 19 mit dem ventilseitigen Rastelement 20 im Eingriff und in der Freigabelage ist das andere anschlagsseitige Rastelement 19 mit dem ventilseitigen Rastelement 20 im Eingriff. Das ventilseitige Rastelement 20 ist hier als Rastnocke und das anschlagsseitige Rastelement 19 ist hier als Rastausnehmung ausgebildet. In der verrasteten Lage greift der Rastnocken in die Rastausnehmung ein.

Der Ventilstössel 7 ist von der Durchflusslage in die Absperrlage über einen Stösselhub bewegbar. Der Stösselhub entspricht einer Hubbewegung des Handrads zum Ventilgehäuse 2. Die Hubbewegung des Handrads ist eine kombinierte Dreh- und Längsbewegung. Das Anschlagselement 11 ist von der Anschlagslage in die Freigabelage über einen Anschlagshub bewegbar ist, wobei der Anschlagshub bevorzugt grösser als der Stösselhub ist.

Vorzugsweise weist das Anschlagselement 11 eine anschlagsseitige Anschlagsfläche 12 auf und das Handrad 10 weist eine handradseitige Anschlagsfläche 13 auf. In der Anschlagslage steht die anschlagsseitige Anschlagsfläche 12 derart, dass bei einer Bewegung des Handrads 10 die handradseitige Anschlagsfläche 13 mit der anschlagsseitigen Anschlagsfläche 12 in Kontakt bringbar ist bzw. in Kontakt ist. Diese Lage wird in den Figuren 2a bis 2d gezeigt.

In der gezeigten Ausführungsform weist das Anschlussrohrstück 26 einen Befestigungsabschnitt 21 mit einem Flansch 22 und einem sich dem Flansch 22 anschliessenden Aussengewinde 23, auf welchem eine Mutter 24 mit einem Innengewinde 25 gelagert ist, auf. Der Flansch 22 weist Seitenflächen 40 auf, mit welchen der Flansch 22 in einer Aufnahme in einem Spülkasten ausgerichtet werden kann.

In einer anderen Ausführungsform kann das Ventilgehäuse 2 den Flansch 22 und die Mutter 24 aufweisen.

Von den Schnittdarstellungen der Figuren 1d, 2d, 3d und 4d ist ersichtlich, dass der Wasserführungskanal 3 einen sich vom Eingang 4 weg ersteckenden ersten Kanalabschnitt 41, der sich entlang einer ersten Mittelachse M41, und einen sich zum Ausgang 5 hin erstreckenden zweiten Kanalabschnitt 42, der sich entlang einer zweiten Mittelachse M42 erstreckt, aufweist, wobei die beiden Mittelachsen M41, M42 in einem Winkel α, alpha winklig geneigt zueinander stehen. Der Winkel α, alpha ist in der gezeigten Ausführungsform 90°.

**BEZUGSZEICHENLISTE**

| | | | |
|---|---|---|---|
| 1 | Absperrventil | | Anschlagselement |
| 2 | Ventilgehäuse | 29 | Anschlussstutzen |
| 3 | Wasserführungskanal | 30 | Anschlussstutzengewinde |
| 4 | Eingang | 31 | Aussengewinde Ventilstössel |
| 5 | Ausgang | 32 | Innengewinde Gehäuse |
| 6 | Anschlussstutzen | 33 | Gewindebüchse |
| 7 | Ventilstössel | 34 | Gewindestruktur |
| 8 | Dichtfläche | 35 | Einrastabschnitt |
| 9 | Ventilsitz | 36 | Lagerabschnitt |
| 10 | Handrad | 37 | Drehübertragungsstruktur |
| 11 | Anschlagselement | 38 | Anschlussstutzen |
| 12 | anschlagseitige | 39 | Wasserführungsabschnitt |
| | Anschlagsfläche | 40 | Seitenflächen |
| 13 | handradseitige | 41 | erster Kanalabschnitt |
| | Anschlagsfläche | 42 | zweiter Kanalabschnitt |
| 14 | Hülse | 43 | Innengewinde |
| 15 | Seitenwand | M41 | erste Mittelachse |
| 16 | zylindrischer Innenraum | M42 | zweite Mittelachse |
| 17 | zylindrischer Abschnitt | D | Drehachse |
| 18 | Einschnitt | X | Kollisionsstelle |
| 19 | anschlagseitiges | | |
| | Rastelement | | |
| 20 | ventilseitiges Rastelement | | |
| 21 | Befestigungsabschnitt | | |
| 22 | Flansch | | |
| 23 | Aussengewinde | | |
| 24 | Mutter | | |
| 25 | Innengewinde | | |
| 26 | Anschlussrohrstück | | |
| 27 | Mehrkantstruktur | | |
| | Anschlussrohrstück | | |
| 28 | Kantstruktur | | |

## Patentansprüche

1. Absperrventil (1), insbesondere ein Eckventil, umfassend
ein Ventilgehäuse (2) mit einem Wasserführungskanal (3), der einen Eingang (4) und einen Ausgang (5) aufweist und mit einem vom Ventilgehäuse (2) wegragenden, den Ausgang (5) bereitstellenden Anschlussstutzen (6),
einen Ventilstössel (7) mit einer Dichtfläche (8), welche in einer Durchflusslage beabstandet zu einem im Wasserführungskanal (3) angeordneten Ventilsitz (9) liegt und welche in einer Absperrlage dichtend am Ventilsitz (9) anliegt, und
ein um eine Drehachse (D) drehbares Handrad (10), das mit dem Ventilstössel (7) in fester, insbesondere drehfester, Verbindung steht und mit welchem der Ventilstössel (7) betätigbar ist, **dadurch gekennzeichnet,**
**dass** das Absperrventil (1) weiterhin ein auf das Handrad (10) wirkendes Anschlagselement (11) aufweist, wobei das Anschlagselement (11) von einer Anschlagslage in eine Freigabelage bewegbar ist,
wobei in der Anschlagslage das Anschlagselement (11) derart zum Handrad (10) liegt, dass das Handrad (10) nicht oder nur eingeschränkt betätigbar ist; und
wobei in der Freigabelage das Anschlagselement (11) derart zum Handrad liegt, dass das Handrad betätigbar ist.

2. Absperrventil (1) nach Anspruch 1, **dadurch gekennzeichnet, dass** das Absperrventil (1) weiterhin ein Anschlussrohrstück (26) umfasst, wobei das Ventilgehäuse (2) mit einem am Eingang (4) vorgesehenen Anschlussstutzen (29) mit dem Anschlussrohrstück (26) in Verbindung steht.

3. Absperrventil (1) nach Anspruch 2, **dadurch gekennzeichnet, dass** das Anschlussrohrstück (26) eine Mehrkantstruktur (27) aufweist und dass das Anschlagselement (11) eine dazu passende Kantstruktur (28) aufweist, wobei das Anschlagselement (11) aus der Anschlagslage nur dann in die Freigabelage bewegbar ist, wenn die Kantstruktur (28) zur Mehrkantstruktur (27) ausgerichtet ist.

4. Absperrventil (1) nach Anspruch 3, **dadurch gekennzeichnet, dass** das Anschlagselement (11) drehfest, aber längsverschieblich, am Ventilgehäuse (2) gelagert ist, und dass wenn das Anschlagselement (11) mit seiner Kantstruktur (28) in die Mehrkantstruktur (27) des Anschlussrohrstücks (26) eingreift, eine Vedrehsicherung zwischen dem Ventilgehäuse (2) und dem Anschlussrohrstück (26) bereitstellbar ist.

5. Absperrventil (1) nach einem der Ansprüche 2 bis 4, **dadurch gekennzeichnet, dass** für die Demontage des Ventilgehäuses (2) vom Anschlussrohrstück (26) das Anschlagselement von der Freigabelage in die Anschlagslage bewegt werden muss, derart, dass der Eingriff zwischen der Kantstruktur (28) und der Mehrkantstruktur (27) aufhebbar ist und dass vor der Bewegung des Anschlagselements der Ventilstössel (7) mit dem Handrad (10) in die Durchflusslage bewegt werden muss.

6. Absperrventil (1) nach einem der vorhergehenden Ansprüche, **dadurch gekennzeichnet, dass** das Anschlagselement (11) eine Hülse (14) ist, welche eine Seitenwand (15) aufweist, die sich um das Ventilgehäuses (2) herum erstreckt, und welche an der Seitenwand (15) relativ zum Ventilgehäuse (2) verschiebbar gelagert ist.

7. Absperrventil (1) nach Anspruch 6, **dadurch gekennzeichnet, dass** die Hülse (14) einen mindestens teilweise zylindrisch ausgebildeten Innenraum (16) aufweist und dass das Ventilgehäuse (2) einen zylindrischen Abschnitt (17) aufweist, wobei die Hülse (14) über den zylindrischen Innenraum (16) am zylindrischen Abschnitt (17) verschiebbar gelagert ist.

8. Absperrventil (1) nach Anspruch 6 oder 7, **dadurch gekennzeichnet, dass** die Hülse (14) einen Einschnitt (18) aufweist, durch welchen der Anschlussstutzen (6) hindurchragt.

9. Absperrventil (1) nach einem der vorhergehenden Ansprüche, **dadurch gekennzeichnet, dass** das Anschlagselement (11) mindestens ein anschlagseitiges Rastelement (19) aufweist und dass das Ventilgehäuse (2) mindestens ein ventilseitiges Rastelement (20) aufweist, welche Rastelemente (19, 20) eine Verrastung des Anschlagselements (11) zum Ventilgehäuse (2) in der Anschlagslage und/oder in der Freigabelage bereitstellen.

10. Absperrventil (1) nach Anspruch 9, **dadurch gekennzeichnet, dass** zwei anschlagsseitige Rastelemente (19) angeordnet sind und dass ein ventilseitiges Rastelement (20) angeordnet ist, wobei in der Anschlagslage das eine anschlagsseitige Rastelement (19) mit dem ventilseitigen Rastelement (20) im Eingriff ist und in der Freigabelage das andere anschlagsseitige Rastelement (19) mit dem ventilseitigen Rastelement (20) im Eingriff ist; und/oder
dass ein anschlagsseitiges Rastelement (19) angeordnet ist und dass zwei ventilseitige Rastelemente (20) angeordnet sind, wobei in der Anschlagslage das eine ventilseitige Rastelement (19) mit dem anschlagseitigen Rastelement (20) im Eingriff ist und in der Freigabelage das andere ventilseitige Rastelement (19) mit dem anschlagseitigen Rastelement (20) im Eingriff ist.

11. Absperrventil (1) nach einem der vorhergehenden Ansprüche, **dadurch gekennzeichnet, dass**
wenn das Anschlagselement (11) in der Anschlagslage ist, der Ventilstössel (7) in der Durchflusslage ist; und wenn das Anschlagselement (11) in der Freigabelage ist, der Ventilstössel (7) durch Betätigung des Handrads (10) von der Durchflusslage in die Verschlusslage bewegbar ist;
oder
wenn das Anschlagselement (11) in der Anschlagslage ist, der Ventilstössel (7) in der Verschlusslage ist; und wenn das Anschlagselement (11) in der Freigabelage ist, der Ventilstössel (7) durch Betätigung des Handrads (10) von der Durchflusslage in die Verschlusslage bewegbar ist.

12. Absperrventil (1) nach einem der vorhergehenden Ansprüche, **dadurch gekennzeichnet,**
**dass** das Anschlagselement (11) in Richtung der Drehachse (D) entlang einer Längsbewegung relativ zum Ventilgehäuse (2) von der Anschlagslage in die Freigabelage verschiebbar ist; oder
**dass** das Anschlagselement (11) entlang einer Drehbewegung um die Drehachse (D) herum relativ zum Ventilgehäuse (2) von der Anschlagslage in die Freigabelage verschiebbar ist; oder
**dass** das Anschlagselement (11) in Richtung der Drehachse (D) und um die Drehachse (D) herum relativ zum Ventilgehäuse (2) von der Anschlagslage in die Freigabelage verschiebbar ist.

13. Absperrventil (1) nach einem der vorhergehenden Ansprüche, **dadurch gekennzeichnet, dass** der Ventilstössel (7) von der Durchflusslage in die Absperrlage über einen Stösselhub bewegbar ist, welcher Stösselhub einer Hubbewegung des Handrads zum Ventilgehäuse (2) entspricht, und dass das Anschlagselement (11) von der Anschlagslage in die Freigabelage über einen Anschlagshub bewegbar ist, wobei der Anschlagshub bevorzugt grösser als der Stösselhub ist.

14. Absperrventil (1) nach einem der vorhergehenden Ansprüche, **dadurch gekennzeichnet, dass** das Anschlagselement (11) eine anschlagsseitige Anschlagsfläche (12) aufweist und dass das Handrad (10) eine handradseitige Anschlagsfläche (13) aufweist, wobei in der Anschlagslage die anschlagsseitige Anschlagsfläche (12) derart steht, dass bei einer Bewegung des Handrads (10) die handradseitige Anschlagsfläche (13) mit der anschlagsseitigen Anschlagsfläche (12) in Kontakt bringbar ist bzw. in Kontakt ist.

15. Absperrventil (1) nach einem der vorhergehenden Ansprüche, **dadurch gekennzeichnet, dass** das Ventilgehäuse (2) einen Befestigungsabschnitt (21) mit einem Flansch (22) und einem sich dem Flansch (22) anschliessenden Aussengewinde (23), auf welchem eine Mutter (24) mit einem Innengewinde (25) gelagert ist, aufweist; oder nach einem der vorhergehenden Ansprüche 2 bis 14, **dadurch gekennzeichnet, dass** das Anschlussrohrstück vorzugsweise einen Befestigungsabschnitt (19) mit einem Flansch (20) und einem sich dem Flansch (20) anschliessenden Aussengewinde (21), auf welchem eine Mutter (22) mit einem Innengewinde (23) gelagert ist, aufweist.
